# EUROPÄISCHE PATENTSCHRIFT

(11) **EP 3 837 449 B1**
(45) Veröffentlichungstag und Bekanntmachung des Hinweises auf die Patenterteilung: **24.05.2023**
(21) Anmeldenummer: 19740322.3
(22) Anmeldetag: 01.07.2019
(51) Int. Cl.: F16C 17/02

(54) **LUFTLAGER, LAGEREINHEIT UND KOMPRESSOR**
AIR BEARING, BEARING UNIT AND COMPRESSOR
PALIER À AIR, UNITÉ PALIER ET COMPRESSEUR

(30) Priorität: 15.08.2018 DE 102018213697
(43) Veröffentlichungstag der Anmeldung: 23.06.2021
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE); WIEDMANN, Felix, 70469 Stuttgart (DE)
(86) Internationale Anmeldenummer: PCT/EP2019/067583
(87) Internationale Veröffentlichungsnummer: WO 2020/035209

(56) Entgegenhaltungen:
- EP-A2- 2 600 007
- WO-A1-2015/038602
- JP-A- 2005 163 939
- US-A- 4 133 585
- US-A- 5 427 455

## Beschreibung

Die Erfindung betrifft ein Luftlager, insbesondere für eine Lagereinheit eines Kompressors. Die Erfindung betrifft auch eine Lagereinheit, welche ein erfindungsgemäßes Luftlager sowie eine Welle, welche in der Öffnung des Luftlagers drehbar gelagert ist, umfasst, sowie einen Kompressor, insbesondere für ein Brennstoffzellensystem, welcher eine erfindungsgemäße Lagereinheit umfasst.

### Stand der Technik

Eine Brennstoffzelle ist eine galvanische Zelle, welche die chemische Reaktionsenergie eines kontinuierlich zugeführten Brennstoffes und eines Oxidationsmittels in elektrische Energie wandelt und dabei eine Spannung bereit stellt. Eine Brennstoffzelle ist also ein elektrochemischer Energiewandler. Bei bekannten Brennstoffzellen werden insbesondere Wasserstoff (H2) und Sauerstoff (O2) in Wasser (H2O), elektrische Energie und Wärme gewandelt. Zur Erhöhung der Spannung können mehrere Brennstoffzellen zu einer Brennstoffzelleneinheit zusammengefasst und elektrisch in Reihe geschaltet werden.

Ein Brennstoffzellensystem umfasst eine Brennstoffzelleneinheit, welche mehrere Brennstoffzellen aufweist, mit einer Anode und einer Kathode. Wasserstoff als Brennstoff wird in einem Druckgasspeicher gespeichert und der Anode zugeführt. Luft, welche Sauerstoff als Oxidationsmittel enthält, wird der Kathode vorzugsweise durch einen elektrisch angetriebenen Kompressor oder Verdichter zugeführt.

Durch die WO 2015/038602 A1 ist ein Kompressor mit einem Luftlager bekannt, das einen Außenring aufweist, welcher eine zentrale Öffnung zur Aufnahme einer Welle umgibt. In der Öffnung ist eine Federfolie angeordnet, welche elastisch verformbar ist, und eine in der Öffnung angeordnete Oberfolie umfasst, wobei die Federfolie zwischen dem Außenring und der Oberfolie angeordnet ist. Die Federfolie weist einen einstückig ausgebildeten Grundkörper auf. Die Federfolie weist erste Materialbereiche mit einer ersten Federsteifigkeit und zweite Materialbereiche mit einer zweiten Federsteifigkeit auf. Jeder der der ersten Materialbereiche ist in Umfangsrichtung der Öffnung versetzt zu jedem der zweiten Materialbereiche angeordnet und die erste Federsteifigkeit ist höher als die zweite Federsteifigkeit.

Durch die JP 2005 163939 A ist ein Luftlager bekannt, das einen Außenring aufweist, welcher eine zentrale Öffnung zur Aufnahme einer Welle umgibt. In der Öffnung ist eine Federfolie angeordnet, welche elastisch verformbar ist, und eine in der Öffnung angeordnete Oberfolie umfasst, wobei die Federfolie zwischen dem Außenring und der Oberfolie angeordnet ist. Die Federfolie weist einen einstückig ausgebildeten Grundkörper auf. Die Federfolie weist erste Materialbereiche mit einer ersten Federsteifigkeit und zweite Materialbereiche mit einer zweiten Federsteifigkeit auf. Jeder der der ersten Materialbereiche ist in Umfangsrichtung der Öffnung versetzt zu jedem der zweiten Materialbereiche angeordnet und die erste Federsteifigkeit ist höher als die zweite Federsteifigkeit.

Durch die US 4 133 585 A ist ein Kompressor mit einem Luftlager bekannt, das einen Außenring aufweist, welcher eine zentrale Öffnung zur Aufnahme einer Welle umgibt. In der Öffnung ist eine Federfolie angeordnet, welche elastisch verformbar ist, und eine in der Öffnung angeordnete Oberfolie umfasst, wobei die Federfolie zwischen dem Außenring und der Oberfolie angeordnet ist. Die Federfolie weist einen einstückig ausgebildeten Grundkörper auf. Die Federfolie weist erste Materialbereiche mit einer ersten Federsteifigkeit und zweite Materialbereiche mit einer zweiten Federsteifigkeit auf. Jeder der der ersten Materialbereiche ist in Umfangsrichtung der Öffnung versetzt zu jedem der zweiten Materialbereiche angeordnet und die erste Federsteifigkeit ist höher als die zweite Federsteifigkeit. Die zweiten Materialbereiche umfassen Verjüngungsstellen, in denen eine Wandstärke des Grundkörpers verringert ist.

Durch die US 5 427 455 A ist ein Radiallager bekannt, welches eine Einsatzbuchse mit einer Öffnung umfasst, in welcher ein Rotor rotiert. Das Radiallager weist ein Federfolienglied und ein Fluidfolienglied auf, welche innerhalb der Öffnung angeordnet sind. Die Öffnung in der Einsatzbuchse besitzt dabei eine nicht kreisförmige innere Kontur.

### Offenbarung der Erfindung

Es wird ein Luftlager, insbesondere für eine Lagereinheit eines Kompressors vorgeschlagen. Das Luftlager umfasst einen Außenring, welcher eine zentrale Öffnung zur Aufnahme einer Welle umgibt. In der Öffnung ist eine Federfolie angeordnet, welche elastisch verformbar ist, und eine Oberfolie, wobei die Federfolie zwischen dem Außenring und der Oberfolie angeordnet ist. Die Federfolie weist einen einstückig ausgebildeten Grundkörper auf. Die Federfolie weist erste Materialbereiche mit einer ersten Federsteifigkeit und zweite Materialbereiche mit einer zweiten Federsteifigkeit auf. Jeder der der ersten Materialbereiche ist in Umfangsrichtung der Öffnung versetzt zu jedem der zweiten Materialbereiche angeordnet und die erste Federsteifigkeit ist höher als die zweite Federsteifigkeit. Erfindungsgemäß umfassen die zweiten Materialbereiche Verjüngungsstellen, in welchen eine Wandstärke des Grundkörpers verringert ist. Die Wandstärke des Grundkörpers ist also in den Verjüngungsstellen der zweiten Materialbereiche geringer als an anderen Stellen des Grundkörpers. Die ersten Materialbereiche umfassen Sicken, die aus dem Grundkörper ausgeprägt sind.

Gemäß einer vorteilhaften Ausgestaltung der Erfindung ist die Öffnung in dem Außenring kreiszylindrisch und rotationssymmetrisch zu einer Mittelachse ausgestaltet. Die Federsteifigkeit ist dann insbesondere das Verhältnis von einer Federkraft, mit welcher der Grundkörper der Federfolie in radialer Richtung von der Mittelachse weg bewegt wird, zu einer Auslenkung in radialer Richtung, welche der Grundkörper der Federfolie dabei erfährt.

Der Grundkörper der Federfolie ist, wie bereits erwähnt, nicht zwingend rotationssymmetrisch. Insbesondere kann der Grundkörper der Federfolie in Umfangsrichtung der Öffnung Bereiche aufweisen, welche unterschiedliche Abstände von der Mittelachse der Öffnung aufweisen. Auch umfasst der Grundkörper der Federfolie nicht mehrere Teilstücke, welche sich jeweils nur über einen Winkelbereich des Umfangs der Öffnung erstrecken. Der Grundkörper der Federfolie kann aber mehrere annähernd hohlzylindrische Teilstücke aufweisen, welche in Axialrichtung zueinander versetzt in der Öffnung angeordnet sind.

Gemäß einer vorteilhaften Ausgestaltung der Erfindung sind in Umfangsrichtung der Öffnung Lagerbereiche und Belüftungsbereiche vorgesehen. Dabei ist ein Abstand des Grundkörpers der Federfolie zu der Mittelachse der Öffnung in den Lagerbereichen geringer ist als in den Belüftungsbereichen. Die Belüftungsbereiche dienen insbesondere dazu, das Luftlager im Betrieb mit erforderlicher Luft zu versorgen.

Die besagten ersten Materialbereiche mit der höheren ersten Federsteifigkeit sind dabei in den Lagerbereichen angeordnet. Die besagten zweiten Materialbereiche mit der geringeren zweiten Federsteifigkeit sind in den Belüftungsbereichen angeordnet.

Vorzugsweise ist die Oberfolie innerhalb der Öffnung in radialer Richtung verschiebbar. Bei einer Auslenkung der in der Öffnung rotierenden Welle wird somit die Oberfolie nur unwesentlich verformt, aber in radiale Richtung verschoben. Daraufhin wird die Federfolie elastisch verformt. Wie bereits erwähnt, sind vorteilhaft in Umfangsrichtung der Öffnung Lagerbereiche und Belüftungsbereiche vorgesehen Dabei ist ein Abstand der Oberfolie zu der Mittelachse der Öffnung in den Lagerbereichen geringer ist als in den Belüftungsbereichen.

Gemäß einer bevorzugten Ausgestaltung der Erfindung ist an dem Grundkörper der Federfolie mindestens ein elastisch verformbares Federelement angebracht. Das elastisch verformbare Federelement ragt dabei von dem Grundkörper der Federfolie weg und liegt an dem Außenring an.

Vorzugsweise ist das besagte Federelement einstückig mit dem Grundkörper ausgebildet. Das Federelement kann beispielsweise durch Umbiegen von Material des Grundkörpers der Federfolie, beispielsweise um 45° bis 75°, erzeugt werden. Das Federelement kann aber auch tangential von dem Grundkörper der Federfolie abstehen.

Es wird auch eine Lagereinheit, insbesondere für einen Kompressor, vorgeschlagen. Die Lagereinheit umfasst dabei ein erfindungsgemäßes Luftlager sowie eine Welle, welche in der Öffnung des Luftlagers drehbar gelagert ist.

Es wird auch ein Kompressor, insbesondere für ein Brennstoffzellensystem, vorgeschlagen. Der Kompressor umfasst dabei eine erfindungsgemäße Lagereinheit.

### Vorteile der Erfindung

Die Erfindung ermöglicht bei einem Luftlager eine optimale Verteilung der Steifigkeit der Federfolie entlang des Umfangs der Öffnung, in welcher die Welle rotiert. Dadurch kann die Welle vorteilhaft stabil und robust geführt sowie gelagert werden. Die besagte optimale Verteilung der Steifigkeit der Federfolie kann mittels der Erfindung verhältnismäßig einfach und kostengünstig erreicht werden, beispielsweise durch Prägen, Ausformen oder Walzen der entsprechenden Materialbereiche. Durch besagte Arbeitsvorgänge kann die Steifigkeit der Federfolie in jedem Materialbereich gezielt beeinflusst werden. Die Erfindung ermöglicht auch vorteilhaft die Herstellung eine Lagereinheit, welche ein erfindungsgemäßes Luftlager sowie eine darin rotierende Welle umfasst, sowie die Herstellung eines Kompressor, insbesondere für ein Brennstoffzellensystem, welcher eine erfindungsgemäße Lagereinheit umfasst. Die Welle kann dabei mit verhältnismäßig hoher Drehzahl zumindest annähernd verschleißfrei in dem erfindungsgemäßen Luftlager rotieren.

### Kurze Beschreibung der Zeichnungen

Ausführungsformen der Erfindung werden anhand der Zeichnungen und der nachfolgenden Beschreibung näher erläutert.

Es zeigen:
- Figur 1: eine Schnittdarstellung einer Lagereinheit,
- Figur 2: eine vergrößerte Darstellung eines ersten Materialbereichs der Federfolie aus Figur 1,
- Figur 3: eine vergrößerte Darstellung eines zweiten Materialbereichs der Federfolie aus Figur 1 und
- Figur 4: eine schematische Darstellung eines Brennstoffzellensystems.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

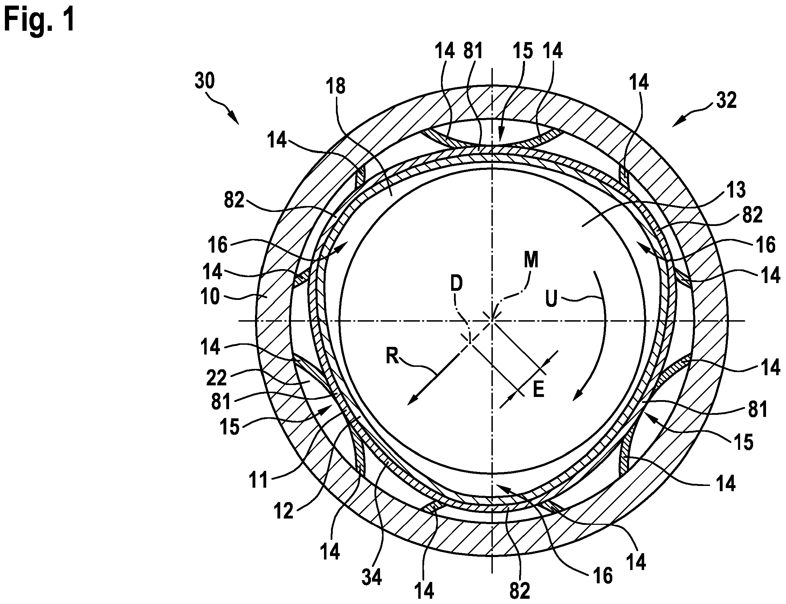

Figur 1 zeigt eine Schnittdarstellung einer Lagereinheit 30, welche ein Luftlager 32 und eine relativ zu dem Luftlager 32 drehbare Welle 13 umfasst. Die Welle 13 ist dabei vorliegend kreiszylindrisch ausgestaltet. Die Lagereinheit 30 dient beispielsweise zum Einsatz in einem Kompressor 28 für ein Brennstoffzellensystem 70.

Das Luftlager 32 umfasst einen Außenring 10, welcher eine zentrale Öffnung 22 umgibt. Die Öffnung 22 dient zur Aufnahme der Welle 13. Die Öffnung 22 ist vorliegend kreiszylindrisch ausgestaltet und rotationssymmetrisch zu einer Mittelachse M. Die Öffnung 22 kann auch einen Querschnitt aufweisen, welcher von einer Kreisform abweicht. In der hier gezeigten Darstellung verläuft die Schnittebene rechtwinklig zu der Mittelachse M.

Eine Richtung entlang der Mittelachse M wird als Axialrichtung bezeichnet. Eine Richtung, welche rechtwinklig auf der Mittelachse M steht und von der Mittelachse M auf den Außenring 10 zuläuft, wird als radiale Richtung R bezeichnet. Eine Richtung, welche um die Mittelachse M der Öffnung 22 umläuft, wird als Umfangsrichtung U bezeichnet. Die Axialrichtung, die radiale Richtung R und die Umfangsrichtung U bilden ein Zylinderkoordinatensystem.

In Umfangsrichtung U der Öffnung 22 sind abwechselnd Lagerbereiche 15 und Belüftungsbereiche 16 vorgesehen. Die Belüftungsbereiche 16 dienen dazu, das Luftlager 32 im Betrieb mit erforderlicher Luft zu versorgen. Vorliegend sind drei Lagerbereiche 15 vorgesehen, welche um 120° versetzt zueinander angeordnet sind. Vorliegend sind auch drei Belüftungsbereiche 16 vorgesehen, welche um 120° versetzt zueinander angeordnet sind. Die Lagerbereiche 15 sind zu den jeweils benachbarten Belüftungsbereichen 16 jeweils um etwa 60° versetzt angeordnet.

Das Luftlager 32 der Lagereinheit 30 umfasst eine Federfolie 11, welche elastisch verformbar ist, und eine Oberfolie 12, welche innerhalb der Öffnung 22 in radialer Richtung R verschiebbar ist. Die Federfolie 11 und die Oberfolie 12 sind dabei innerhalb der Öffnung 22 zwischen der Welle 13 und dem Außenring 10 angeordnet. Die Federfolie 11 ist zwischen dem Außenring 10 und der Oberfolie 12 angeordnet. Die Welle 13 ist also koaxial von der Oberfolie 12, der Federfolie 11 und dem Außenring 10 umgeben.

In den Belüftungsbereichen 16 sind die Federfolie 11 und die Oberfolie 12 dabei weiter von der Mittelachse M beabstandet als in den Lagerbereichen 15. Im Betrieb der Lagereinheit 30 ist die rotierende Welle 13 von einem Tragluftspalt 18 umgeben. In den Belüftungsbereichen 16 ist der Tragluftspalt 18 breiter ist als in den Lagerbereichen 15. Der Tragluftspalt 18 befindet sich zwischen der rotierenden Welle 13 und der ruhenden Oberfolie 12. Ein Abstand der Oberfolie 12 zu der Mittelachse M der Öffnung 22 ist in den Lagerbereichen 15 geringer ist als in den Belüftungsbereichen 16.

Die Federfolie 11 weist einen hohlzylindrischen Grundkörper 34 auf, welcher vorliegend nicht rotationssymmetrisch ausgebildet ist. Der Grundkörper 34 der Federfolie 11 ist in Umfangsrichtung U der Öffnung 22 umlaufend einstückig ausgebildet. Ein Abstand des Grundkörpers 34 zu der Mittelachse M ist in den Lagerbereichen 15 geringer als in den Belüftungsbereichen 16.

Die Federfolie 11 weist erste Materialbereiche 81 mit einer ersten Federsteifigkeit und zweite Materialbereiche 82 mit einer zweiten Federsteifigkeit auf. Die ersten Materialbereiche 81 sind dabei in den Lagerbereichen 15 angeordnet, und die zweiten Materialbereiche 82 sind in den Belüftungsbereichen 16 angeordnet. Vorliegend sind somit drei erste Materialbereiche 81 vorgesehen, welche in Umfangsrichtung U der Öffnung 22 um 120° versetzt zueinander angeordnet sind. Auch sind drei zweite Materialbereiche 82 vorgesehen, welche ebenfalls in Umfangsrichtung U der Öffnung 22 um 120° versetzt zueinander angeordnet sind. Die ersten Materialbereiche 81 sind zu den jeweils benachbarten zweiten Materialbereiche 82 jeweils um etwa 60° versetzt angeordnet.

Die erste Federsteifigkeit der ersten Materialbereiche 81 ist dabei höher ist als die zweite Federsteifigkeit der zweiten Materialbereiche 82. Im Betrieb der Lagereinheit 30 weist der Tragluftspalt 18, der die rotierende Welle 13 umgibt, eine Luftsteifigkeit auf. Die Luftsteifigkeit des Tragluftspalts 18 ist von einer Drehzahl der Welle 13 abhängig. Bei einer Nenndrehzahl der Welle 13, welche beispielsweise in einem Bereich zwischen 20.000 U/min und 120.000 U/min liegt, ist die Luftsteifigkeit des Tragluftspalts 18 größer als die Federsteifigkeit der ersten Materialbereiche 81 und höher als die zweite Federsteifigkeit der zweiten Materialbereiche 82.

An dem Grundkörper 34 der Federfolie 11 sind vorliegend auch elastisch verformbare Federelemente 14 angebracht. Die Federelemente 14 ragen von dem Grundkörper 34 weg und liegen an dem Außenring 10 an. Die Federelemente 14 sind vorliegend einstückig mit dem Grundkörper 34 ausgebildet. Die besagten Federelemente 14 der Federfolie 11 sind vorliegend in den Belüftungsbereichen 16 sowie in den Lagerbereichen 15 angeordnet.

Im Betrieb rotiert die Welle 13 um eine Drehachse D. In einer optimalen Konstellation fluchtet die Drehachse D mit der Mittelachse M der Öffnung 22. Im Betrieb der Lagereinheit 30, also wenn die Welle 13 in dem Luftlager 32 rotiert, kann die Welle 13 aber eine Exzentrizität E relativ zu der Mittelachse M der Öffnung 22 aufweisen. Diese Exzentrizität E bewirkt einen unrunden Lauf der Welle 13.

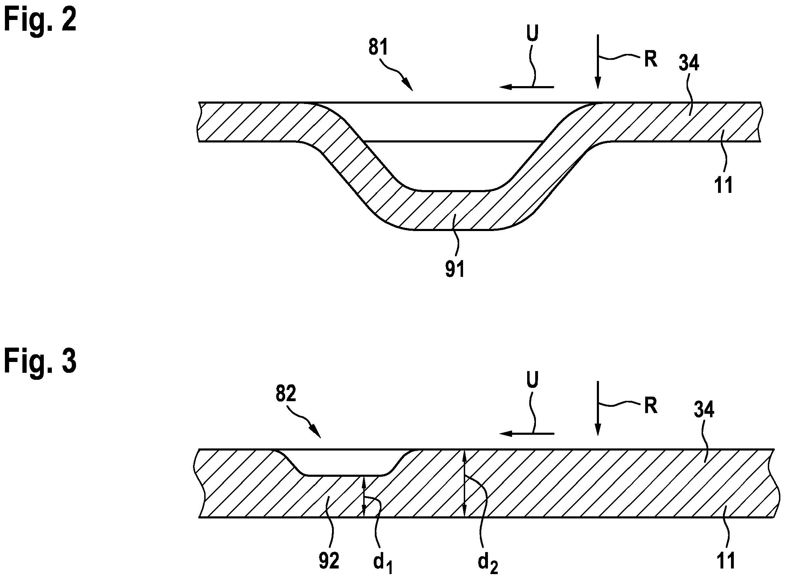

Figur 2 zeigt eine vergrößerte Darstellung eines der ersten Materialbereiche 81 der Federfolie 11 aus Figur 1, welcher die erste, erhöhte Federsteifigkeit aufweist. Der erste Materialbereich 81 umfasst mehrere Sicken 91, welche in Axialrichtung zueinander versetzt angeordnet sind. Die in Figur 1 gezeigten Federelemente 14 sind in Axialrichtung zu der hier gezeigten Sicke 91 versetzt angeordnet und hier nicht dargestellt.

Die besagten Sicken 91 sind aus dem Grundkörper 34 der Federfolie 11 ausgeprägt und somit einstückig mit dem Grundkörper 34 ausgebildet.

Figur 3 zeigt eine vergrößerte Darstellung eines der zweiten Materialbereiche 82 der Federfolie 11 aus Figur 1, welcher die zweite, verringerte Federsteifigkeit aufweist. Der zweite Materialbereich 82 umfasst mehrere Verjüngungsstellen 92, welche in Axialrichtung zueinander versetzt angeordnet sind. Die in Figur 1 gezeigten Federelemente 14 sind in Axialrichtung zu der hier gezeigten Verjüngungsstelle 92 versetzt angeordnet und hier nicht dargestellt.

An der Verjüngungsstelle 92 weist der Grundkörper 34 der Federfolie 11 eine erste Materialstärke d1 auf. An anderen Stellen weist der Grundkörper 34 der Federfolie 11 eine zweite Materialstärke d2 auf. Die zweite Materialstärke d2 ist größer als die erste Materialstärke d1. Die Wandstärke des Grundkörpers 34 ist also in der Verjüngungsstelle 92 gegenüber den anderen Stellen des Grundkörpers 34 verringert.

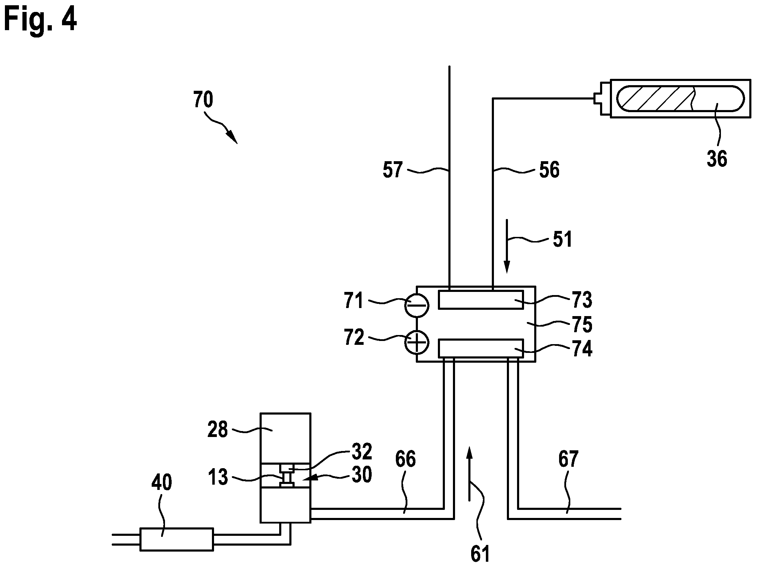

Figur 4 zeigt eine schematische Darstellung eines Brennstoffzellensystems 70. Das Brennstoffzellensystem 70 umfasst eine Brennstoffzelleneinheit 75, welche mehrere, hier nicht explizit dargestellte Brennstoffzellen aufweist. Die Brennstoffzelleneinheit 75 weist eine Anode 73 und eine Kathode 74 auf. Die einzelnen Brennstoffzellen weisen jeweils negative Elektroden auf, welche gemeinsam die Anode 73 der Brennstoffzelleneinheit 75 bilden. Die einzelnen Brennstoffzellen weisen jeweils positive Elektroden auf, welche gemeinsam die Kathode 74 der Brennstoffzelleneinheit 75 bilden.

Die Brennstoffzelleneinheit 75 weist ein negatives Terminal 71 auf, welches elektrisch mit der Anode 73 verbunden ist. Ebenso weist die Brennstoffzelleneinheit 75 ein positives Terminal 72 auf, welches elektrisch mit der Kathode 74 verbunden ist. Zwischen dem negativen Terminal 71 und dem positiven Terminal 72 der Brennstoffzelleneinheit 75 liegt im Betrieb des Brennstoffzellensystems 70 eine elektrische Spannung an. Das negative Terminal 71 und das positive Terminal 72 der Brennstoffzelleneinheit 75 sind beispielsweise mit einem hier nicht dargestellten Bordnetz eines Kraftfahrzeugs, insbesondere eines Elektrofahrzeugs, verbunden.

Das Brennstoffzellensystem 70 umfasst eine erste Zufuhrleitung 56 zur Zuführung eines Brennstoffs, insbesondere Wasserstoff, zu der Anode 73. Dazu ist die erste Zufuhrleitung 56 mit einem Druckgasspeicher 36 verbunden, in welchem Wasserstoff bei einem Druck von beispielsweise 350 bar bis 700 bar gespeichert ist. Im Betrieb des Brennstoffzellensystems 70 fließt Wasserstoff in eine erste Strömungsrichtung 51 von dem Druckgasspeicher 36 zu der Anode 73 der Brennstoffzelleneinheit 75. Das Brennstoffzellensystem 70 umfasst auch eine erste Abfuhrleitung 57 zur Abführung von überschüssigem Brennstoff von der Anode 73 der Brennstoffzelleneinheit 75.

Das Brennstoffzellensystem 70 umfasst ferner eine zweite Zufuhrleitung 66 zur Zuführung eines Oxidationsmittels, insbesondere Luft mit Sauerstoff, zu der Kathode 74. Dazu ist die zweite Zufuhrleitung 66 mit einem Kompressor 28 verbunden. Der Kompressor 28 saugt Luft über einen Luftfilter 40 an, komprimiert die angesaugte Luft und führt die komprimierte Luft in einer zweiten Strömungsrichtung 61 zu der Kathode 74 der Brennstoffzelleneinheit 75. Das Brennstoffzellensystem 70 umfasst auch eine zweite Abfuhrleitung 67 zur Abführung von überschüssigem Oxidationsmittel von der Kathode 74. Die zweite Abfuhrleitung 67 dient auch zur Abführung von Produktwasser, welches durch die elektrochemische Reaktion in den Brennstoffzellen der Brennstoffzelleneinheit 75 entsteht.

Der Kompressor 28 umfasst eine Lagereinheit 30 mit einer zylindrische Welle 13, welche mittels eines Luftlagers 32 drehbar gelagert ist. Die Lagereinheit 30 ist dabei ausgebildet wie in Figur 1 in Verbindung mit Figur 2 und Figur 3 dargestellt.

Der Kompressor 28 ist derart ausgelegt, dass in einem Normalbetrieb, bei einer Drehzahl, beispielsweise zwischen 20.000 U/min und 120.000 U/min, ein aerodynamischer Betrieb der Lagereinheit 30 und des Luftlagers 32 des Kompressors 28 möglich ist.

## Patentansprüche

1. Luftlager (32), insbesondere für eine Lagereinheit (30) eines Kompressors (28), umfassend einen Außenring (10), welcher eine zentrale Öffnung (22) zur Aufnahme einer Welle (13) umgibt,
eine in der Öffnung (22) angeordnete Federfolie (11), welche elastisch verformbar ist, und eine in der Öffnung (22) angeordnete Oberfolie (12), wobei die Federfolie (11) zwischen dem Außenring (10) und der Oberfolie (12) angeordnet ist, wobei die Federfolie (11) einen einstückig ausgebildeten Grundkörper (34) aufweist, wobei die Federfolie (11) erste Materialbereiche (81) mit einer ersten Federsteifigkeit und zweite Materialbereiche (82) mit einer zweiten Federsteifigkeit aufweist, wobei jeder der ersten Materialbereiche (81) in Umfangsrichtung (U) der Öffnung (22) versetzt zu jedem der zweiten Materialbereiche (82) angeordnet ist, und wobei die erste Federsteifigkeit höher ist als die zweite Federsteifigkeit, wobei die zweiten Materialbereiche (82) Verjüngungsstellen (92) umfassen, in welchen eine Wandstärke des Grundkörpers (34) verringert ist, **dadurch gekennzeichnet, dass** die ersten Materialbereiche (81) Sicken (91) umfassen, welche aus dem Grundkörper (34) ausgeprägt sind.

2. Luftlager (32) nach Anspruch 1, **dadurch gekennzeichnet, dass** die Öffnung (22) kreiszylindrisch und rotationssymmetrisch zu einer Mittelachse (M) ausgestaltet ist.

3. Luftlager (32) nach Anspruch 2, **dadurch gekennzeichnet, dass** in Umfangsrichtung (U) der Öffnung (22) Lagerbereiche (15) und Belüftungsbereiche (16) vorgesehen sind, wobei ein Abstand des Grundkörpers (34) zu der Mittelachse (M) in den Lagerbereichen (15) geringer ist als in den Belüftungsbereichen (16), und dass die ersten Materialbereiche (81) in den Lagerbereichen (15) angeordnet sind, und
die zweiten Materialbereiche (82) in den Belüftungsbereichen (16) angeordnet sind.

4. Luftlager (32) nach einem der vorstehenden Ansprüche, **dadurch gekennzeichnet, dass** die Oberfolie (12) innerhalb der Öffnung (22) in radialer Richtung (R) verschiebbar ist.

5. Luftlager (32) nach einem der vorstehenden Ansprüche, **dadurch gekennzeichnet, dass** an dem Grundkörper (34) mindestens ein elastisch verformbares Federelement (14) angebracht ist, welches von dem Grundkörper (34) weg ragt und an dem Außenring (10) anliegt.

6. Luftlager (32) nach Anspruch 5, **dadurch gekennzeichnet, dass** das Federelement (14) einstückig mit dem Grundkörper (34) ausgebildet ist.

7. Lagereinheit (30), insbesondere für einen Kompressor (28), umfassend ein Luftlager (32) nach einem der vorstehenden Ansprüche sowie eine Welle (13), welche in der Öffnung (22) des Luftlagers (32) drehbar gelagert ist.

8. Kompressor (28), insbesondere für ein Brennstoffzellensystem (70), umfassend eine Lagereinheit (30) nach Anspruch 7.

## Claims

1. Air bearing (32), in particular for a bearing unit (30) of a compressor (28), comprising an outer ring (10) which surrounds a central opening (22) for accommodating a shaft (13), a spring foil (11) which is arranged in the opening (22) and is elastically deformable, and a top foil (12) which is arranged in the opening (22), wherein the spring foil (11) is arranged between the outer ring (10) and the top foil (12), wherein the spring foil (11) has a main body (34) which is formed in one piece, wherein the spring foil (11) has first material regions (81) with a first spring stiffness and second material regions (82) with a second spring stiffness, wherein each of the first material regions (81) is arranged offset from each of the second material regions (82) in a circumferential direction (U) of the opening (22), and wherein the first spring stiffness is greater than the second spring stiffness, wherein the second material regions (82) comprise narrowing points (92) in which a wall thickness of the main body (34) is reduced, **characterized in that** the first material regions (81) comprise beads (91) which are stamped outwards from the main body (34).

2. Air bearing (32) according to Claim 1, **characterized in that** the opening (22) is configured to be circularly cylindrical and circularly symmetrical in relation to a central axis (M).

3. Air bearing (32) according to Claim 2, **characterized in that** bearing regions (15) and ventilation regions (16) are provided in the circumferential direction (U) of the opening (22), wherein a spacing of the main body (34) to the central axis (M) in the bearing regions (15) is smaller than in the ventilation regions (16), and **in that** the first material regions (81) are arranged in the bearing regions (15) and the second material regions (82) are arranged in the ventilation regions (16).

4. Air bearing (32) according to one of the preceding claims, **characterized in that** the top foil (12) is displaceable within the opening (22) in a radial direction (R).

5. Air bearing (32) according to one of the preceding claims, **characterized in that** attached to the main body (34) is at least one elastically deformable spring element (14), which projects away from the main body (34) and bears against the outer ring (10) .

6. Air bearing (32) according to Claim 5, **characterized in that** the spring element (14) is formed in one piece with the main body (34).

7. Bearing unit (30), in particular for a compressor (28), comprising an air bearing (32) according to one of the preceding claims and a shaft (13) which is rotatably mounted in the opening (22) of the air bearing (32).

8. Compressor (28), in particular for a fuel-cell system (70), comprising a bearing unit (30) according to Claim 7.

## Revendications

1. Palier à air (32), notamment pour une unité de palier (30) d'un compresseur (28), comprenant une bague extérieure (10) qui entoure une ouverture centrale (22) pour la réception d'un arbre (13),
une feuille élastique (11) agencée dans l'ouverture (22), qui est élastiquement déformable, et une feuille supérieure (12) agencée dans l'ouverture (22), la feuille élastique (11) étant agencée entre la bague extérieure (10) et la feuille supérieure (12), la feuille élastique (11) présentant un corps de base (34) réalisé d'un seul tenant, la feuille élastique (11) présentant des premières zones de matériau (81) ayant une première rigidité élastique et des deuxièmes zones de matériau (82) ayant une deuxième rigidité élastique, chacune des premières zones de matériau (81) étant agencée en décalage par rapport à chacune des deuxièmes zones de matériau (82) dans la direction circonférentielle (U) de l'ouverture (22), et la première rigidité élastique étant supérieure à la deuxième rigidité élastique, les deuxièmes zones de matériau (82) comprenant des emplacements de rétrécissement (92) dans lesquels l'épaisseur de paroi du corps de base (34) est réduite, **caractérisé en ce que** les premières zones de matériau (81) comprennent des moulures (91) qui font saillie sur le corps de base (34).

2. Palier à air (32) selon la revendication 1, **caractérisé en ce que** l'ouverture (22) est conçue sous forme cylindrique circulaire et symétrique en rotation par rapport à un axe central (M).

3. Palier à air (32) selon la revendication 2, **caractérisé en ce que** des zones de palier (15) et des zones d'aération (16) sont prévues dans la direction circonférentielle (U) de l'ouverture (22), une distance du corps de base (34) par rapport à l'axe central (M) étant plus faible dans les zones de palier (15) que dans les zones d'aération (16), et **en ce que** les premières zones de matériau (81) sont agencées dans les zones de palier (15) et les deuxièmes zones de matériau (82) sont agencées dans les zones d'aération (16).

4. Palier à air (32) selon l'une quelconque des revendications précédentes, **caractérisé en ce que** la feuille supérieure (12) peut être déplacée dans la direction radiale (R) à l'intérieur de l'ouverture (22).

5. Palier à air (32) selon l'une quelconque des revendications précédentes, **caractérisé en ce qu'**au moins un élément élastique élastiquement déformable (14) est disposé sur le corps de base (34), qui s'étend à partir du corps de base (34) et s'appuie sur la bague extérieure (10) .

6. Palier à air (32) selon la revendication 5, **caractérisé en ce que** l'élément élastique (14) est réalisé d'un seul tenant avec le corps de base (34).

7. Unité de palier (30), notamment pour un compresseur (28), comprenant un palier à air (32) selon l'une quelconque des revendications précédentes ainsi qu'un arbre (13) qui est monté de manière rotative dans l'ouverture (22) du palier à air (32).

8. Compresseur (28), notamment pour un système de pile à combustible (70), comprenant une unité de palier (30) selon la revendication 7.
